# EUROPEAN PATENT APPLICATION

(11) **EP 4 596 385 A1**
(43) Date of publication of application: **06.08.2025**
(21) Application number: 24836652.8
(22) Date of filing: 20.09.2024
(51) Int. Cl.: B62K 15/00

(54) **VEHICLE AND METHOD FOR USING SAME**

(30) Priority: 20.12.2023 CN 202311773260; 06.08.2024 CN 202421893826 U; 11.09.2024 CN 202422234711 U
(71) Applicant: Shanghai Bangbang Robotics Co., Ltd, Shanghai 201600 (CN)
(72) Inventor: LI, Jianguo, Shanghai 201600 (CN); LIU, Jie, Shanghai 201600 (CN); ZHANG, Xunyin, Shanghai 201600 (CN); ZHANG, Zhefu, Shanghai 201600 (CN); HE, Zhan, Shanghai 20160 (CN); LI, Yongqiang, Shanghai 201600 (CN); LIU, Bofeng, Shanghai 201600 (CN)
(74) Representative: Bandpay & Greuter
(86) International application number: PCT/CN2024/120217
(87) International publication number: WO 2025/130211

(57) **Abstract**

A vehicle is provided, including a chassis, a seat, and a support assembly; two ends of the support assembly are rotatably connected with the chassis and the seat, respectively; the support assembly drives the seat to be folded or unfolded; the seat is disposed spaced apart from the chassis when it is unfolded; the seat is attached to the chassis when it is folded; the chassis includes a first chassis frame and a second chassis frame, the first chassis frame is slid relative to the second chassis frame to retract or extend the chassis; the first chassis frame and the second chassis frame are adjacent when the chassis is extended; the first chassis frame and the second chassis frame are partially overlapped when the chassis is retracted; the chassis is retracted or extended while the seat is folded or unfolded; and in the vertical direction a projection of the support assembly is not overlapped with both a projection of the chassis and a projection of the seat. When the vehicle is completely folded, the seat bracket is located at an outer side of the chassis, the space above the chassis is not occupied. This can reduce the thickness of the folded elderly mobility scooter, thereby reducing the size of the folded mobility scooter and making it easier to carry.

## Description

This application claims priority to Chinese patent application No. 202311773260.8 filed on December 20, 2023; priority of Chinese Patent Application No. 202421893826.0 filed on August 06, 2024; and Chinese Patent Application No. 202422234711.7 filed on September 11, 2024, all of which are hereby incorporated by reference in their entireties.

### TECHNICAL FIELD

The present disclosure relates to the technical field of vehicles, and in particular to a vehicle and a method of use thereof.

### BACKGROUND

Mobility scooters are low-speed electric vehicles and are an emerging means of transportation in recent years. Because of their convenient operation and low safety risks, they are favored by consumers. Currently, a mobility scooter includes a chassis, a lifting and folding mechanism, and a seat cushion. The bottom end of the lifting and folding mechanism is connected to the chassis, and the top end of the lifting and folding mechanism is connected with the seat cushion; and lifting or pressing the seat cushion can realize the unfolding or folding of the lifting and folding mechanism.

However, the above mobility scooter, after being folded, has a large thickness and has a large chassis volume, which results in the folded mobility scooter occupying a large space, being difficult to carry, thereby affecting the user experience, and it is not easy to carry.

### SUMMARY

On the one hand, a vehicle is provided, including: a chassis, a seat, and a support assembly; one end of the support assembly is rotatably connected with the chassis, the other end of the support assembly is rotatably connected with the seat, and the support assembly is able to drive the seat to be folded or unfolded; when the seat is in an unfolded state, the seat is disposed spaced apart from the chassis in a vertical direction; when the seat is in a folded state, the seat is attached onto the chassis; the chassis includes a first chassis frame and a second chassis frame, and the first and second chassis frames are provided adjacent to each other along a first horizontal direction, and the first chassis frame is able to slide relative to the second chassis frame to make the chassis retracted or extended; when the chassis is in an extended state, the first chassis frame is slid to a first position and the first chassis frame and the second chassis frame are adjacent to each other; when the chassis is in an retracted state, the first chassis frame is slid to a second position and the first chassis frame and the second chassis frame are at least partly overlapped; the seat is folded while the chassis is retracted, and the seat is unfolded while the chassis is extended; where a projection of the support assembly in the vertical direction is not overlapped with a projection of the chassis in the vertical direction, a projection of the support assembly in the vertical direction is not overlapped with a projection of the seat in the vertical direction.

On the other hand, a method of using a vehicle is provided, the vehicle includes a chassis, a pedestal, a seat bracket, a seat support frame, a backrest bracket, and a transmission linkage rod; the seat bracket includes a seat linkage rod, one end of the seat linkage rod is rotatably connected with the seat support frame; the pedestal is provided at a side of the chassis along a second horizontal direction, and the pedestal is rotatably connected with one end of the seat linkage rod; and the seat bracket, the seat support frame, and the pedestal form a first linkage mechanism; the backrest bracket is rotationally connected to the seat support frame, and the transmission link is rotationally connected with the backrest bracket and seat bracket, respectively, and the backrest bracket, the transmission link, the seat bracket and the seat support frame form a second linkage mechanism; the chassis includes a first chassis frame and a second chassis frame; along the first horizontal direction, the first chassis frame is slidably mounted to one side of the second chassis frame, and the first chassis frame and the second chassis frame are located in the same plane; and the seat bracket and the first chassis frame jointly act;

The method of use includes:
when folding, rotating the backrest bracket clockwise, rotating the transmission linkage rod and the seat bracket anticlockwise relative to the seat support frame, and driving, by one end of the seat bracket away from the seat support frame, the first chassis frame to move along the first horizontal direction so as to retract the chassis; and/or
when unfolding, rotating the backrest bracket anticlockwise, rotating the transmission linkage rod and the seat bracket clockwise relative to the seat support frame, and driving, by one end of the seat bracket away from the seat support frame, the first chassis frame to move along the first horizontal direction so as to extend the chassis.

Compared with the related art, the vehicle and the method of use thereof provided by embodiments of the present application have the following advantages.

For a mobility scooter in the related art, its folded lifting and folding mechanism is located between a chassis and a seat cushion, resulting in the folded mobility scooter being thicker and less portable. However, for the vehicle according to an embodiment of the present application, the pedestal rotatably connected with the seat bracket is provided at a side of the chassis. That is, the pedestal is provided at one side of the chassis, and when the vehicle is completely folded, the seat bracket is located at an outer side of the chassis. That is, in the embodiments of the present application, after the mobility scooter is completely folded, the seat bracket, the pedestal, etc. in the support assembly for realizing the folding are all located at the outer side of the chassis; they do not occupy the space above the chassis, thereby reducing the thickness of the folded mobility scooter.

Moreover, after the mobility scooter is completely folded, the backrest cushion and the seat cushion are respectively laid flat and attached to the upper surface of the chassis. This can further reduce the thickness of the folded mobility scooter, make the folded mobility scooter small and thin. Therefore, the size of the folded mobility scooter is further reduced, and it is easy to carry.

Meanwhile, in an embodiment of the present application, the support assembly for folding and the chassis jointly act. When the support assembly realizes the folding of the backrest cushion and the seat cushion, it can also drive the chassis to retract. Therefore, the volume of the folded mobility scooter is further reduced. And when the support assembly realizes the unfolding of the backrest cushion and the seat cushion, it can also drive the chassis to extend, so that the whole mobility scooter is folded or unfolded. Therefore, the mobility scooter is folded and unfolded more conveniently.

### BRIEF DESCRIPTION OF DRAWINGS

FIG. 1 is a schematic structural diagram of a mobility scooter in an unfolded state according to an embodiment of the present application.
FIG. 2 is a schematic diagram of an arrangement of a first rotation point, a second rotation point, and a third rotation point in a second linkage mechanism according to an embodiment of the present application.
FIG. 3 is a schematic structural diagram of a mobility scooter in a folded state according to an embodiment of the present application.
FIG. 4 is a schematic diagram of the position of a seat support frame when it is fully unfolded according to an embodiment of the present application.
FIG. 5 is a schematic diagram of the position of a seat support frame when it is fully folded according to an embodiment of the present application.
FIG. 6 is a schematic diagram of the position and structure of a first locking assembly according to an embodiment of the present application.
FIG. 7 is a first schematic diagram in which a chassis and a second linkage mechanism jointly act according to an embodiment of the present application.
FIG. 8 is a second schematic diagram in which a chassis and a second linkage mechanism jointly act according to an embodiment of the present application.
FIG. 9 is a schematic diagram of an arrangement of a first actuator on a chassis according to an embodiment of the present application.
FIG. 10 is a first schematic diagram in which a first actuator, a second linkage mechanism, and a first chassis frame jointly act according to an embodiment of the present application.
FIG. 11 is a second schematic diagram in which a first actuator, a second linkage mechanism, and a first chassis frame jointly act according to an embodiment of the present application.
FIG. 12 is a schematic diagram of an arrangement of a locking mechanism relative to a chassis according to an embodiment of the present application.
FIG. 13 is a schematic exploded diagram of a locking mechanism according to an embodiment of the present application.
FIG. 14 is a first schematic diagram of the assembling of a first chassis frame and a second chassis frame according to an embodiment of the present application.

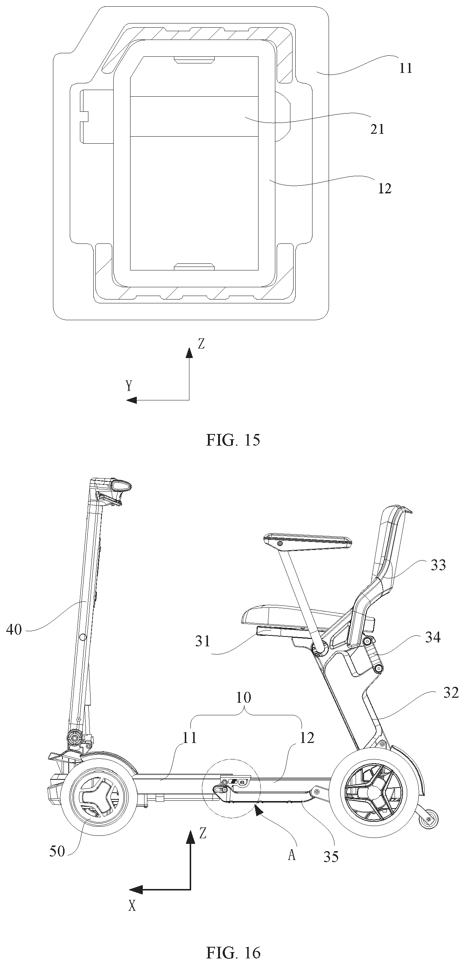

FIG. 15 is a second schematic diagram of the assembling of a first chassis frame and a second chassis frame according to an embodiment of the present application.
FIG. 16 is a schematic diagram of a chassis being in a locked state according to an embodiment of the present application.
FIG. 17 is a schematic enlarged diagram for A in FIG. 16.
FIG. 18 is a schematic structural diagram of a locking hook according to an embodiment of the present application.
FIG. 19 is a schematic structural diagram of a force application arm according to an embodiment of the present application.
FIGS. 20 to 22 are schematic diagrams of a process in which a chassis is extended according to an embodiment of the present application.
FIGS. 23 to 25 are schematic diagrams of a process in which a chassis is retracted according to an embodiment of the present application.
FIG. 26 is a first schematic diagram of an arrangement in which a wire harness storage mechanism is provided on a chassis according to an embodiment of the present application.
FIG. 27 is a second schematic diagram of an arrangement in which a wire harness storage mechanism is provided on a chassis according to an embodiment of the present application.
FIG. 28 is a schematic structural diagram of the wire harness storage mechanism in FIG. 26.
FIG. 29 is a schematic structural diagram of the wire harness storage mechanism in FIG. 27.
FIG. 30 is a schematic structural diagram of a storage box according to an embodiment of the present application.

### Reference numbers:

10 chassis; 11 first chassis frame; 12 second chassis frame; 14 second locking assembly; 111 angle limiting part;
20 locking mechanism; 21 locking pin; 22 locking hook; 23 force application arm; 24 guide pin; 25 elastic member; 221 hook body; 222 fixture block; 223 unlocking lever; 231 abutting part; 232 guide groove; 2211 hinged hole; 2221 limiting slot; 2222 guide part; 2231 unlocking part;
30 support assembly; 31 seat support frame; 32 seat bracket; 33 backrest bracket; 34 transmission linkage rod; 35 first rod member; 36 pedestal; 321 first seat linkage rod; 322 second seat linkage rod;
40 wire harness storage mechanism; 41 wire harness box; 43 storage box; 44 first connecting member; 45 second connecting member; 411 first end; 412 second end; 413 bent section; 431 fixing position; 432 first fixing hole; 433 clearance groove; 434 third fixing hole; 435 first opening; 436 second opening; 437 wiring groove;
51 backrest cushion; 52 first limit block; 53 bent portion; 54 support arm; 61 seat cushion; 62 first limit surface; 63 second limit surface; 65 first actuator; 66 first locking assembly; 80 traveling mechanism; 90 steering mechanism; 100 mobility scooter; 101 first rotation point; 102 second rotation point; 103 third rotation point.

### DESCRIPTION OF EMBODIMENTS

The following will clearly and comprehensively describe some embodiments of the present disclosure with reference to the accompanying drawings. Apparently, the described embodiments are merely a part rather than all embodiments of the present disclosure. All other embodiments obtained by persons of ordinary skill in the art based on embodiments of the present disclosure shall fall within the protection scope of the present disclosure.

In order to facilitate the description of the embodiments of the present application, the coordinate system in the drawings is illustrated, where the X-axis direction represents a first horizontal direction, and the first horizontal direction can be a forward and backward direction of a vehicle, and this direction is consistent with a direction in which a vehicle moves forward and backward; the Y-axis direction represents a second horizontal direction, and the second horizontal direction can be a width direction of a vehicle; and the Z-axis direction represents a vertical direction, and the vertical direction represents a height direction of a vehicle.

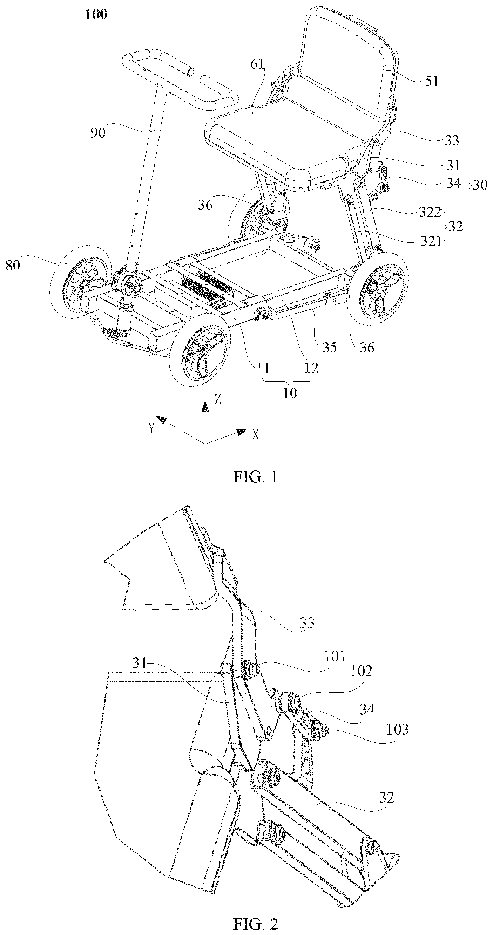

As shown in FIG. 1, a vehicle provided by an embodiment of the present application may be a mobility scooter or a wheelchair. For example, the mobility scooter may be an elderly mobility scooter, and the wheelchair may be a manual foldable wheelchair or an electric foldable wheelchair, and embodiments of the present application are not limited thereto. In embodiments of the present application, an example in which a vehicle is configured as an elderly mobility scooter is taken for illustration.

A mobility scooter 100 according to an embodiment of the present application includes a chassis 10, a traveling mechanism 80, and a steering mechanism 90; where the chassis 10 is configured as a carrying unit for the entire mobility scooter 100. The traveling mechanism 80 is provided on the chassis 10; the traveling mechanism 80 includes a traveling wheel and a driving assembly that is in transmission connection with the traveling wheel. The driving assembly includes but is not limited to a driving motor; the driving motor is used to provide power to the traveling wheel, so as to make the mobility scooter 100 move forward, backward, etc. The steering mechanism 90 includes a steering gear and a steering rod, where the steering gear is provided at a front end of the chassis 10, and the steering gear can drive the traveling wheel to steer; the steering rod is provided at the front end of the chassis 10, and the steering rod extends in a vertical direction; a bottom end of the steering rod is connected with the steering gear, and the steering gear can be controlled by the steering rod to act so as to steer the traveling wheel.

The mobility scooter 100 provided by the embodiment of the present application further includes a support assembly 30 for supporting a backrest cushion 51 or a seat cushion 61, etc. When the support assembly 30 acts, the backrest cushion 51 or the seat cushion 61 can be folded or unfolded. Meanwhile, the support assembly 30 in the embodiment of the present application and the chassis 10 jointly act, and when the support assembly 30 is folded, the support assembly 30 can drive the chassis 10 to be retracted; and when the support assembly 30 is unfolded, the support assembly 30 can drive the chassis 10 to be extended, so that the entire mobility scooter 100 is folded or unfolded.

The support assembly 30 includes at least one first linkage mechanism, and the first linkage mechanism is provided at one side of the chassis 10 along a second horizontal direction, and is rotatably connected relative to the chassis 10. A rotational plane of the first linkage mechanism is in a first plane; the first plane is a plane where the first horizontal direction and vertical direction are located, and the first plane is located outside the chassis 10 along the second horizontal direction.

Specifically, the first linkage mechanism includes a seat bracket 32, a seat support frame 31, and a pedestal 36. The seat bracket 32 is used for the mounting of the seat cushion 61. When the mobility scooter 100 is in an unfolded state (when the mobility scooter 100 is in use state), the seat bracket 32 is located at a rear end of the chassis 10 along the first horizontal direction, and the seat bracket 32 is located above the chassis 10 along the vertical direction. A certain space is maintained between the seat bracket 32 and the chassis 10 along the vertical direction, and the seat bracket 32 maintains a certain distance from the steering rod along the first horizontal direction to facilitate the user to ride and operate the steering rod.

The seat bracket 32 is provided between the chassis 10 and the seat support frame 31. The seat bracket 32 includes a first seat linkage rod 321 and a second seat linkage rod 322, and the first seat linkage rod 321 and the second seat linkage rod 322 are arranged spaced apart along the first horizontal direction. A first end of the first seat linkage rod 321 and a first end of the second seat linkage rod 322 are respectively rotatably connected with the seat support frame 31 and connected to different positions of the seat support frame 31.

In the second horizontal direction, the pedestal 36 is provided at one side of the chassis 10, that is, the pedestal 36 may be provided at an outside of the chassis 10. A second end of the first seat linkage rod 321 and a second end of the second seat linkage rod 322 are respectively rotatably connected with the pedestal 36 and connected to different positions of the pedestal 36. Therefore, the first seat linkage rod 321, the second seat linkage rod 322, the pedestal 36, and the seat support frame 31 form the above mentioned first linkage mechanism, and the first linkage mechanism is able to fold and unfold. Further, when the first linkage mechanism is completely folded, the seat bracket 32 is located at a side of the chassis 10 along the second horizontal direction.

Regarding mobility scooters in the related art, when a mobility scooter is folded, its lifting and folding mechanism is located between a chassis and a seat cushion, resulting in the folded mobility scooter being thicker and less portable. However, after the mobility scooter 100 in the embodiment of the present application is completely folded, the seat bracket 32 is located at one side of the chassis 10 along the second horizontal direction; that is, a projection of the support assembly 30 in the vertical direction is not overlapped with a projection of the chassis 10 in the vertical direction, and the projection of the support assembly 30 in the vertical direction is not overlapped with a projection of a seat in the vertical direction. The support assembly 30 does not occupy a space above the chassis 10. This can reduce the thickness of the folded mobility scooter 100. Therefore, the size of the folded mobility scooter 100 is further reduced and it is easy to carry.

Where, the projection of the support assembly 30 in the vertical direction means that with a vertical direction axis of the support assembly 30 as a projection line, the shape of the support assembly 30 is projected onto a reference plane; the projection of the seat in the vertical direction means that with a vertical direction axis of the seat as a projection line, the shape of the seat is projected onto a reference plane; and the projection of the chassis 10 in the vertical direction means that with a vertical direction axis of the chassis 10 as a projection line, the shape of the chassis 10 is projected onto a reference plane. In the reference plane, the projection of the seat is overlapped with the projection of the chassis 10, indicating that the seat is located above the chassis 10. However, the projection of the support assembly 30 is not overlapped with the projection of the chassis 10, and the projection of the support assembly 30 is not overlapped with the projection of the seat, indicating that the support assembly 30 is located at a side of the chassis 10, and the support assembly 30 is also located at the side of the seat.

Based on the above embodiments, in an embodiment of the present application, a length and a hinge position of each "linkage rod" of the first linkage mechanism is further adjusted, so that when the first linkage mechanism is completely folded, one end of the seat bracket 32 away from the pedestal 36 is inclined downward along the first horizontal direction and is located below the chassis 10.

For example, when the mobility scooter 100 is completely folded, the seat bracket 32 is inclined downward along the first horizontal direction, and in the vertical direction, the end of the seat bracket 32 away from the pedestal 36 is located below the chassis 10. With this arrangement, a "negative angle" can be formed between the folded seat bracket and the chassis, and the "negative angle" refers to an angle between an extending direction of the folded seat bracket and the first horizontal direction. Such an arrangement allows the seat support frame 31 to remain being attached to an upper surface of the chassis 10 or allows a gap between the seat support frame 31 and the upper surface of the chassis 10 to be smaller, thereby reducing the thickness of the folded mobility scooter 100.

The mobility scooter 100 provided in the embodiment of the present application further includes a backrest bracket 33 and a transmission linkage rod 34. The backrest bracket 33 is used for the mounting of the backrest cushion 51 and is provided at a rear side of the seat support frame 31 along the first horizontal direction. The backrest bracket 33 is rotatably connected with the seat support frame 31, so as to form a first rotation point 101.

The transmission linkage rod 34 is used to connect the seat bracket 32 and the backrest bracket 33. Exemplary, the transmission linkage rod 34 is provided between the seat bracket 32 and the backrest bracket 33. Both ends of the transmission linkage rod 34 are rotatably connected with the backrest bracket 33 and the seat bracket 32, respectively, so as to form a second rotation point 102 and a third rotation point 103, respectively.

Exemplary, the seat bracket 32 includes a first seat linkage rod 321 and a second seat linkage rod 322. One end of the transmission linkage rod 34 is rotatably connected with the backrest bracket 33 so as to form the second rotation point 102. The other end of the transmission linkage rod 34 is selectively rotatably connected with the first seat linkage rod 321 or the second seat linkage rod 322 so as to form the third rotation point 103. Therefore, the backrest bracket 33, the transmission linkage rod 34, the seat bracket 32, and the seat support frame 31 form a second linkage mechanism.

Furthermore, as shown in FIG. 2, in an embodiment of the present application, a connection line between the first rotation point 101 and the second rotation point 102 is defined as a first connection line; a connection line between the second rotation point 102 and the third rotation point 103 is defined as a second connection line; and when the mobility scooter 100 is fully unfolded, an angle range of an included angle formed between the first connection line and the second connection line is between 0° and 10°.

In a possible implementation, the included angle formed between the first connection line and the second connection line in the embodiment of the present application is configured to be 0°; that is, the first rotation point 101, the second rotation point 102, and the third rotation point 103 are collinear when the second linkage mechanism is fully unfolded; in other words, the first rotation point 101, the second rotation point 102, and the third rotation point 103 are in the same straight line.

With this arrangement, when the mobility scooter is in the unfolded state and is further locked by means of the locking assembly, the second linkage mechanism is in a self-locking state. The transmission linkage rod 34 not only has the function of transmission and connection, but also acts as a force-bearing rod to support the seat support frame 31. When a driver drives the mobility scooter, the transmission linkage rod 34 can share part of the gravity; that is, part of the gravity acts on a locking pin of the locking assembly, and part of the gravity acts on the transmission linkage rod 34 to reduce the load-bearing strength of the locking pin.

In one embodiment, when the second linkage mechanism is fully unfolded, the first rotation point is positioned above the seat cushion 61 in the vertical direction, and when the second linkage mechanism or the first linkage mechanism is completely folded, the seat cushion 61 is positioned above the chassis 10 and close to the upper surface of the chassis 10; alternatively, the seat cushion 61 may be attached to the upper surface of the chassis 10, and the embodiments of the present application are not limited thereto.

Further, the first rotation point is provided above the seat cushion 61. This not only ensures that the backrest cushion 51 can be laid flat on the upper surface of the chassis when the backrest cushion 51 is completely folded backward along the first horizontal direction; but also can achieve avoidance of interference between the first rotation point and the seat cushion 61, so as to facilitate the installing of the seat cushion 61 and the installing of articulated elements between the backrest bracket 33 and the seat support frame 31.

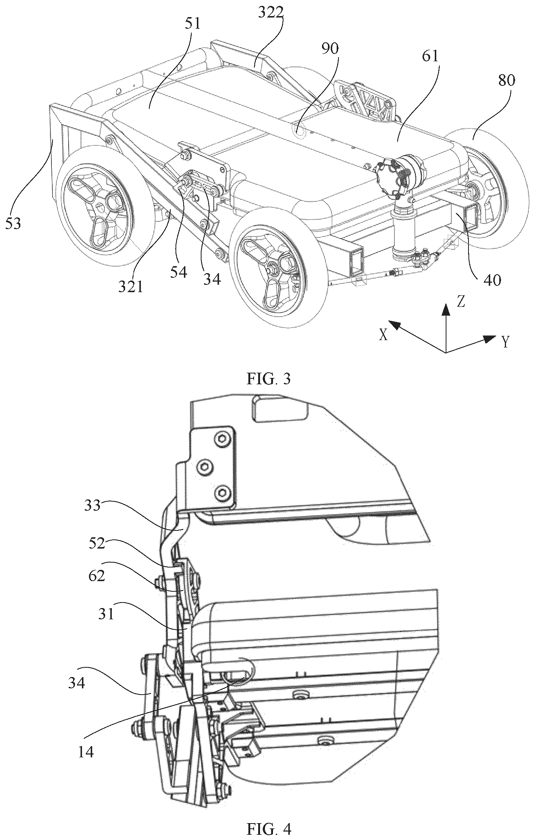

As shown in FIGS. 1 and 3, in an embodiment of the present application, the backrest bracket 33 rotates clockwise relative to the seat support frame 31 to fold the second linkage mechanism; that is, the backrest bracket 33 rotates towards the rear side along the first horizontal direction and then folds the second linkage mechanism. When the second linkage mechanism is completely folded, the backrest cushion 51 is located above the chassis 10, and the back side of the backrest cushion 51 is close to the upper surface of the chassis 10, or the back side of the backrest cushion 51 is attached to the upper surface of the chassis 10.

Along the first horizontal direction, the backrest cushion 51 and the seat cushion 61 are disposed opposite to each other and are located in a same plane. "being located in the same plane" means that the upper surface of the backrest cushion 51 and the upper surface of the seat cushion 61 are located in the same horizontal plane or approximately in the same plane with small height difference between them. In this arrangement, the backrest cushion 51 and the seat cushion 61 are provided above the chassis 10 in a tiled state respectively, instead of being stacked in the vertical direction. Therefore, the thickness of the folded mobility scooter 100 can be further reduced.

As shown in FIG. 4, in an embodiment of the present application, a first limit surface 62 is provided on a side, facing the backrest bracket 33, of the seat support frame 31. The first limit surface 62 is located on a rotation path of the backrest bracket 33. For example, in a clockwise direction, the first limit surface 62 is provided at an edge position of the seat support frame 31, and the first limit surface 62 is located on a side surface, facing the backrest bracket 33, of the seat support frame 31, and the first limit surface 62 is located on the rotation path of the backrest bracket 33.

Accordingly, a first limit block 52 is provided at a side, facing the seat support frame 31, of the backrest bracket 33, and the first limit block 52 is provided in matching with the first limit surface 62. For example, the first limit block 52 may be a protrusion protruding from the backrest bracket 33 along the second horizontal direction.

The first limit block 52 is configured such that when the second linkage mechanism is unfolded, the first limit block 52 abuts against the first limit surface 62. Thus, when the second linkage mechanism is unfolded in place, that is, when the first limit block 52 abuts against the first limit surface 62, the backrest bracket 33 is in a first limit position to facilitate subsequent locking of the backrest bracket 33 using a second locking assembly 14.

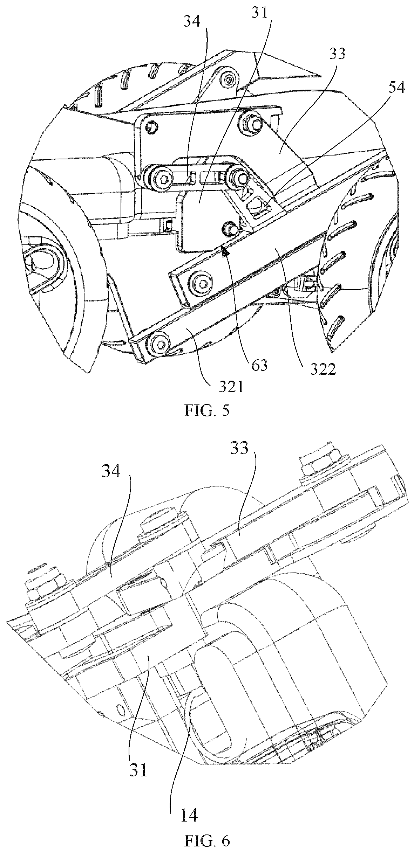

Further, as shown in FIG. 5, a second limit surface 63 is provided at a side, which is close to the seat bracket 32, of the seat support frame 31. The second limit surface 63 is provided in matching with the first seat linkage rod 321 or the second seat linkage rod 322. When the second linkage mechanism is completely folded, the second limit surface 63 abuts against the first seat linkage rod 321 or the second seat linkage rod 322.

For example, along the first horizontal direction, the first seat linkage rod 321 is provided at front side of the second seat linkage rod 322, and the first seat linkage rod 321 and the second seat linkage rod 322 may be arranged in parallel. The second limit surface 63 is provided at a position, which is close to the second seat linkage rod 322, of the seat support frame 31, and the second limit surface 63 is located on a side, which is close to the second seat linkage rod 322, of the seat support frame 31 along the second horizontal direction.

The second limit surface 63 is provided in matching with the second seat linkage rod 322. When the second linkage mechanism is folded, the second limit surface 63 abuts against the second seat linkage rod 322; that is, the seat support frame 31 is pressed against the second seat linkage rod 322. Thus, when the second linkage mechanism is completely folded, the backrest bracket 33 is in a second limit position. It can be understood that the above-described second limit surface 63 can optionally be provided in matching with the first seat linkage rod 321 as needed, and the embodiments of the present application are not limited thereto.

As shown in FIG. 6, the unfolded state of the mobility scooter is locked when the second linkage mechanism is fully unfolded, thereby preventing the first linkage mechanism or the second linkage mechanism from acting to enable the user to ride the mobility scooter. In an embodiment of the present application, a second locking assembly 14 is provided between the backrest bracket 33 and the seat bracket 32. The second locking assembly 14 includes a second locking pin and a second elastic member. The second elastic member may be a second spring, and the second elastic member is configured to provide a locking force to the second locking pin.

For example, the second locking pin and the second spring are provided on the seat support frame 31. A locking groove is provided in the backrest bracket 33. After the second linkage mechanism is unfolded in place, the second locking pin can be inserted into the locking groove to lock the seat support frame 31 and the backrest bracket 33. Further, when there is a need to fold the mobility scooter, an elastic force of the second spring should be overcame to release the second locking pin from the lock groove, and thus the locked state of the backrest bracket 33 and the seat bracket 32 is released.

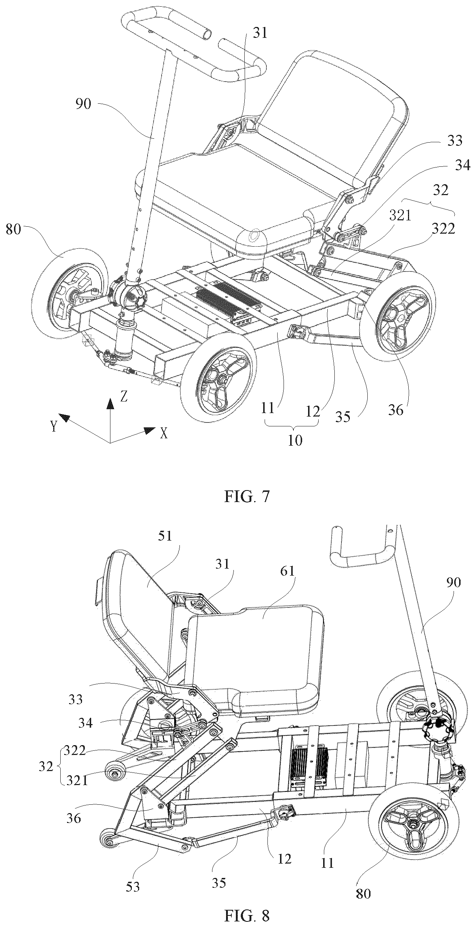

As shown in FIGS. 7 to 11, the chassis 10 according to an embodiment of the present application includes a first chassis frame 11 and a second chassis frame 12. The first chassis frame 11 is provided at a front side of the second chassis frame 12 along the first horizontal direction and is slide along the second chassis frame 12.

Specifically, the first chassis frame 11 and the second chassis frame 12 are opposite to each other along the first horizontal direction. The first chassis frame 11 is slidably mounted to the second chassis frame 12, and both are located in a same plane. For example, the first chassis frame 11 is sleeved on the second chassis frame 12, where the steering rod and the steering gear are provided on the first chassis frame 11, and the pedestal 36 is provided at an outer side of the second chassis frame 12.

In this arrangement, when the mobility scooter 100 is folded, the first chassis frame 11 is slid towards one side of the second chassis frame 12. This can achieve the retraction of the first chassis frame 11, so that the entire folded mobility scooter 100 has smaller volume and is easy to carry.

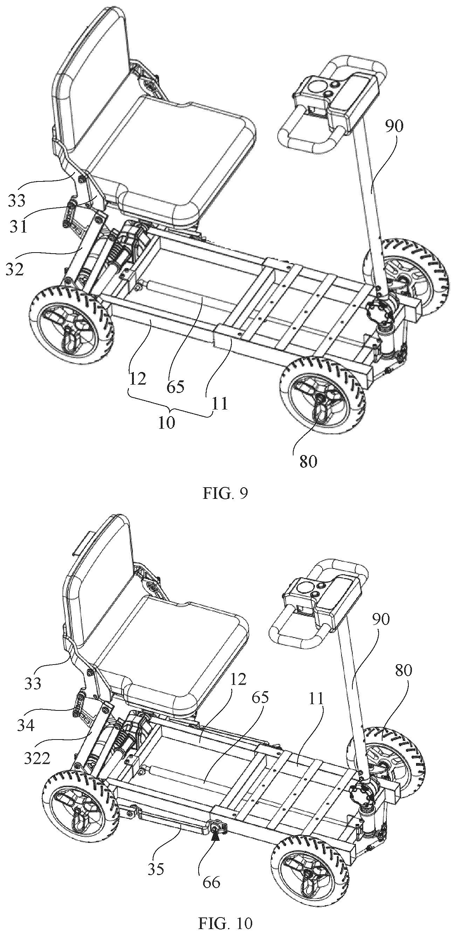

As shown in FIG. 9, a controller and a first actuator 65 are included for an electric retraction mode. The first actuator 65 is in signal connection with the controller. The controller and a button switch can jointly act, and the controller can control the first actuator 65 to act when the switch button is pressed. The first actuator 65 may be one or a combination of an actuator cylinder, a pneumatic spring, or a push-rod motor. The first actuator 65 is provided between the first chassis frame 11 and the second chassis frame 12. The moving direction of the first actuator 65 is consistent with the first horizontal direction, and when the first actuator 65 acts, the first chassis frame 11 can be driven to slide relative to the second chassis frame 12 along the first horizontal direction.

In other embodiments, the retraction method of the chassis 10 that jointly acts with the linkage mechanisms may be understood that the chassis 10 may be retracted or extended when the first linkage mechanism and/or the second linkage mechanism is folded or unfolded. The jointly-acting retraction method includes a first jointly-acting method, in which the first linkage mechanism or the second linkage mechanism is mechanically jointly acts with the chassis; that is, the first linkage mechanism or the second linkage mechanism drives the first chassis frame to slide relative to the second chassis frame, as shown in FIGS. 7 and 8.

In addition, there is a second j ointly-acting method, in which the controller responds and controls the first actuator 65 to act when the first linkage mechanism or the second linkage mechanism is folded or unfolded, as shown in FIGS. 9 to 11. The embodiments of the present application are not limited in this regard, which will be respectively described in detail below.

In an embodiment, the first linkage mechanism or the second linkage mechanism and the chassis 10 adopt the first jointly-acting method described above. Referring to FIGS. 7 and 8, the first chassis frame 11 mechanically jointly acts with the first linkage mechanism or the second linkage mechanism. When the first linkage mechanism or the second linkage mechanism acts, the first chassis frame 11 is slid relative to the second chassis frame 12 along the first horizontal direction.

It can be understood that the first linkage mechanism and the second linkage mechanism mechanically jointly act with the first chassis frame 11, and essentially jointly acts with the first chassis frame by means of the seat bracket. That is, when the first linkage mechanism and the second linkage mechanism act, the seat bracket is driven to rotate so as to change the state of the first chassis frame 11.

For example, when the first linkage mechanism is folded, the first chassis frame 11 can be driven to move towards the second chassis frame 12 along the first horizontal direction, so as to allow the entire chassis 10 to be retracted. When the first linkage mechanism is unfolded, the first chassis frame 11 can be driven to move away from the second chassis frame 12 along the first horizontal direction, so as to allow the entire chassis 10 to be extended.

In detail, the mobility scooter 100 according to an embodiment of the present application further includes a first rod member 35. A first end of the first rod member 35 is connected with the first chassis frame 11, and a second end of the first rod member 35 is connected with the first seat linkage rod 321 or the second seat linkage rod 322. It should be noted that when the chassis 10 is selected to jointly act with the first linkage mechanism, the second end of the first rod member 35 jointly acts with the first seat linkage rod 321. When the chassis 10 is selected to jointly act with the second linkage mechanism, the second end of the first rod member 35 jointly acts with the second seat linkage rod 322. The second seat linkage rod 322 is provided at the rear side of the first seat linkage rod 321 along the first horizontal direction, and the other end of the second seat linkage rod 322 is rotatably connected with the transmission linkage rod 34.

Hereinafter, an embodiment of the present application will be described with that the chassis 10 and the second linkage mechanism jointly act as an example. One end, which is away from the seat support frame 31, of the second seat linkage rod 322 has a bent portion 53. The bent portion 53 is provided at a rear side of the pedestal 36 along the first horizontal direction, and bypasses the pedestal 36 and is rotatably connected with the first rod member 35.

The second seat linkage rod 322 includes a first end and a second end, where the first end of the second seat linkage rod 322 is rotatably connected with the seat support frame 31, and a portion, which is close to the first end, of the second seat linkage rod 322 is rotatably connected with the transmission linkage rod 34.

For example, the portion, which is close to the first end, of the second seat linkage rod 322 is provided with a support arm 54 extending towards the transmission linkage rod 34. One end of the transmission linkage rod 34 is rotatably connected with the backrest bracket 33 to form a second rotation point, and the other end of the transmission linkage rod 34 is connected with the support arm 54 to form a third rotation point.

The second end of the second seat linkage rod 322 is normally rotatably connected with the pedestal 36. In order to make the first chassis frame 11 and the second linkage mechanism jointly act, the second end of the second seat linkage rod 322 has an extension section. The extension section is integrally formed with the second seat linkage rod 322, and the extension section is configured as the bent portion 53, and the bent portion 53 is provided at the rear side of the pedestal 36.

The bent portion 53 bypasses the pedestal 36 and is rotatably connected with the first rod member 35. With this arrangement, the bent portion 53 not only allows a clearance space to be formed between the bent portion 53 and the chassis 10, but also effectively increases the swing range of the first rod member 35, thereby increasing the sliding displacement of the first chassis frame 11 along the first horizontal direction.

The second linkage mechanism, when being folded or unfolded, automatically unlock the first chassis frame 11 and the second chassis frame 12. The first locking pin is inserted between the first rod member, the first chassis frame, and the second chassis frame along the second horizontal direction. The first rod member 35 is located at an outer side of the first chassis frame 11, and the first chassis frame 11 is sleeved on the second chassis frame 12 and is moved relative to the second chassis frame 12 along the first horizontal direction.

The first rod member is provided with an adjusting hole matched with the first locking pin. The adjusting hole is a waist-shaped hole, and the length direction of the adjusting hole is consistent with the first horizontal direction; that is, the length direction of the adjusting hole extends along the first horizontal direction. The second chassis frame is provided with a limiting hole matched with the first locking pin. A rod body of the first locking pin passes through the adjusting hole, and an end of the rod body is inserted in the limiting hole.

An end, located at an outer side of the chassis 10, of the first locking pin is provided with a first sloping surface. The first rod member 35 is provided with a second sloping surface matching with the first sloping surface. When the first rod member is moved in the first horizontal direction, the first sloping surface and the second sloping surface abut against each other and form a wedge-shaped structure, so that a tensile force of the first rod member along the first horizontal direction is converted to a tensile force along the first horizontal direction through the wedge-shaped structure. This tensile force acts on the first locking pin to cause the first locking pin to overcome an elastic force of a first elastic member to move along the second horizontal direction. That is, the first locking pin is pulled out from the limiting hole. This can achieve the unlocking of the first chassis frame and the second chassis frame, and further cause the first chassis frame 11 to move along the first horizontal direction relative to the second chassis frame 12 under the action of the tension force of the first rod member 35.

The second jointly-acting method of the chassis and the linkage mechanism in this embodiment is as shown in FIG. 9. When the first linkage mechanism or the second linkage mechanism is folded or unfolded, the controller responds and controls the first actuator 65 to act. Specifically, in an embodiment, the mobility scooter in the embodiment of the present application further includes a position sensor, and the position sensor is in signal connection with the controller. The position sensor is provided on the seat support frame or the pedestal to detect an act of the first linkage mechanism or the second linkage mechanism.

For example, the position sensor according to an embodiment of the present application may be provided on the seat support frame. The position sensor may detect a change in the position of a certain point of the backrest bracket or the seat bracket, and determine whether the first linkage mechanism or the second linkage mechanism is in a folded or unfolded state according to the change, and synchronize this information to the controller. The controller controls the first actuator 65 to act according to the state of the linkage mechanism. It should be noted that the above position sensor includes an unlimited angle sensor.

Further, in another embodiment, the mobility scooter further includes a second actuator that is in signal connection with the controller. The second actuator acts on the first linkage mechanism or the second linkage mechanism to cause the mobility scooter to be folded or unfolded. When the second actuator acts, the controller controls the first actuator 65 to act.

For example, the second actuator is provided between the chassis and the seat bracket, and the second actuator can drive the seat bracket to rotate relative to the backrest bracket so as to fold or unfold the mobility scooter. When the second actuator acts (rises or falls), this information can be synchronized to the controller. The controller determines the state of the linkage mechanism according to the information, and further controls the second actuator to act. It can be understood that both the first actuator 65 and the second actuator are in signal connection with the controller, and when any one of the two acts, the other can act, so that the mobility scooter can be quickly folded or unfolded.

On the basis of the above embodiments, the contraction and extension of the chassis can be performed under the action of the first actuator 65; meanwhile, the mechanically jointly acting of the first linkage mechanism or the second linkage mechanism and the chassis also acts on the first chassis frame, and the embodiments of the present application are not limited thereto. With this arrangement, the first actuator 65 can provide a folding force, so that the folding and unfolding processes are more labor-saving, and this may achieve the rapid folding or unfolding of the mobility scooter.

Further, the mobility scooter 100 further includes a rear axle motor. The rear axle motor is used to drive walking wheels at the rear side. Along the first horizontal direction, the rear axle motor is provided on the second chassis frame 12 and is arranged close to the pedestal 36. The rear axle motor may be provided in the clearance space formed by the bent portion 53 and the chassis 10; that is, the second linkage mechanism is in avoidance of the rear axle motor by means of the bent portion 53 to form clearance of the rear axle motor on the second linkage mechanism.

In order to keep the backrest cushion 51 and the chassis 10 in a horizontal state as much as possible after the second linkage mechanism is completely folded, the back side of the backrest cushion 51 is provided with a clearance groove matching with the rear axle motor. With this arrangement, when the mobility scooter 100 is completely folded, part of the rear axle motor is located in the clearance groove, and thus the height of the backrest cushion 51 can be reduced, thereby reducing the thickness of the entire mobility scooter 100 after being folded.

It is to be noted that the mobility scooter 100 in an embodiment of the present application includes two first linkage mechanisms, and the first linkage mechanisms are arranged at two sides of the chassis along the second horizontal direction, respectively. Correspondingly, along the second horizontal direction, each of both sides of the chassis 10 is provided with one pedestal 36. Two rotating links are provided on both sides of the backrest bracket 33 respectively, and each transmission linkage rod 34 is connected with the corresponding seat bracket 32, so that the mobility scooter 100 has two second linkage mechanisms. Along the second horizontal direction, the two second linkage mechanisms are provided at both sides of the chassis 10, respectively.

On the basis of the above embodiments, the mobility scooter 100 includes two first rod members 35. The two first rod members 35 are provided at both sides of the chassis 10 along the second horizontal direction respectively. One end of each first rod member 35 is connected with the first chassis frame 11, and the other end of the first rod member 35 is connected with the second linkage mechanism. With this arrangement, the reliability of the folding or unfolding of the mobility scooter 100 and the structural strength of the mobility scooter 100 can be improved, thereby improving driving safety.

Continuing to refer to FIGS. 1 and 2, a vehicle according to an embodiment of the present application is provided, and a method of using the vehicle will be described.

The backrest bracket is rotated clockwise when the mobility scooter is folded; that is, the top of the backrest bracket or the backrest cushion is pressed towards the rear side when the mobility scooter in the unfolded state is folded and stored, so that the backrest bracket is rotated clockwise around the first rotation point relative to the seat support frame.

In this state, the transmission linkage rod and the seat bracket rotate anticlockwise relative to the seat support frame. Exemplary, the transmission linkage rod rotates around the third rotation point towards the front side to make the seat bracket swung towards the front side. That is, the seat bracket rotates anticlockwise around the pedestal, and this in turn may cause an end, which is connected with the first chassis frame, of the seat bracket to swing towards the rear side, and a pulling force is applied to the first rod member 35, and then an end, which is away from the seat support frame, of the seat bracket drives the first chassis frame to move along the first horizontal direction, and thus the chassis is retracted.

When the mobility scooter is unfolded, the backrest bracket is rotated anticlockwise, and the transmission linkage rod and the seat bracket are rotated clockwise relative to the seat support frame. One end, which is away from the seat support frame, of the seat bracket is swung towards the front side, and thus the first chassis frame is driven to move along the first horizontal direction, and the chassis is extended. This process is the reverse of the folding process of the mobility scooter, which is not repeated here.

For the mobility scooter provided in an embodiment of the present application, When the linkage mechanism is folded, the chassis can be synchronously driven to be retracted, thereby simplifying the folding and unfolding process of the entire mobility scooter and enhancing the folding and storage efficiency of the entire mobility scooter.

An embodiment of the present application provides a locking mechanism 20 provided between the first chassis frame 11 and the second chassis frame 12. The locking mechanism 20 is configured to be able to lock the first chassis frame 11 and the second chassis frame 12 when the chassis is fully extended; and the locking mechanism 20 unlocks the locking state of the first chassis frame 11 and the second chassis frame 12 when the chassis 10 needs to be retracted. Therefore, the operational reliability and stability of the mobility scooter 100 can be improved.

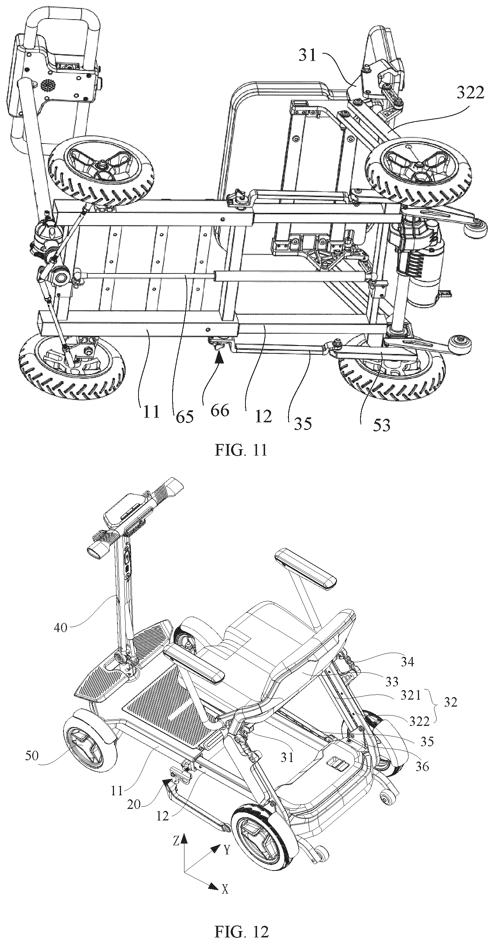

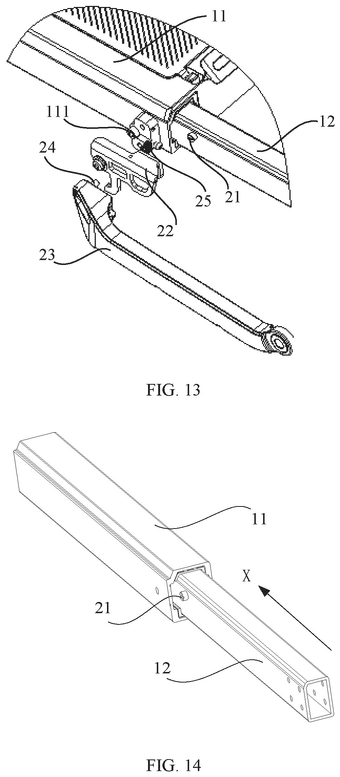

As shown in FIGS. 12 and 13, the locking mechanism 20 provided by an embodiment of the present application includes a locking pin 21 and a locking hook 22 matched with the locking pin 21. The locking pin 21 is provided on the second chassis frame 12, and the locking pin 21 is configured to be received in a gap between the first chassis frame 11 and the second chassis frame 12.

For example, the first chassis frame 11 and the second chassis frame 12 are of square steel. The end of the second chassis frame 12 is inserted into the first chassis frame 11. The locking pin 21 is inserted to the end of the second chassis frame 12 and fixed. An end of the locking pin 21 is exposed to an outer side of the second chassis frame 12, and the exposed portion is matched with and fastened to the locking hook 22. The exposed portion can be located within a gap between the first chassis frame 11 and the second chassis frame 12, so that the locking pin 21 can be received into the gap between the first chassis frame 11 and the second chassis frame 12, and thus the interference between the first chassis frame 11 and the second chassis frame 12 can be avoid. This ensures that the first chassis frame 11 is able to move relative to the second chassis frame 12.

Further, the locking hook 22 is rotatably connected to an end of the first chassis frame 11, and the locking hook 22 is provided close to the locking pin 21, so that when the first chassis frame 11 and the second chassis frame 12 are fully deployed, the locking hook 22 and the locking pin 21 are fastened; when there is a need to unlock the first chassis frame 11 and the second chassis frame 12, the state of the locking hook 22 and the locking pin 21 being fastened is released.

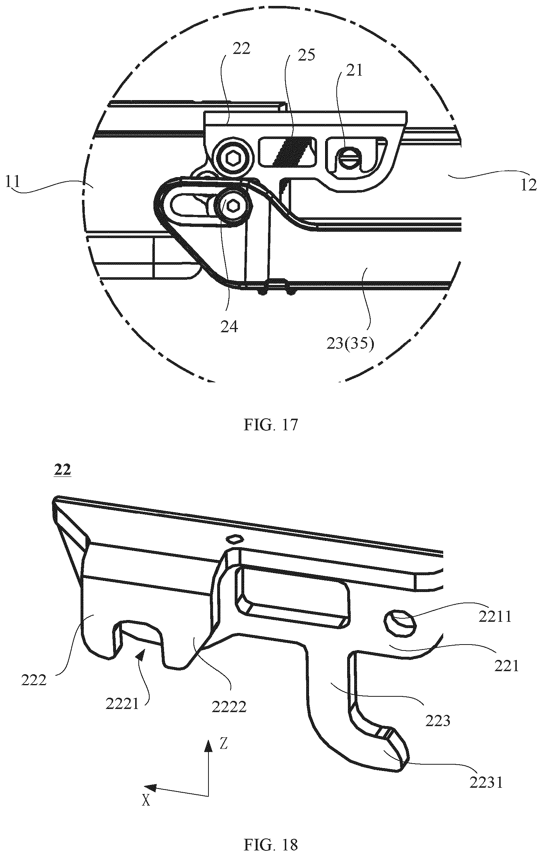

As shown in FIG. 18, the locking hook 22 includes a limiting slot 2221, a guide part 2222, and an unlocking part 2231. The limiting slot 2221 and the guide part 2222 are arranged spaced apart along the first horizontal direction, and the guide part 2222 is located at the front side of the limiting slot 2221 along the first horizontal direction. The limiting slot 2221 and the guide part 2222 are provided opposite to the locking pin 21, respectively. That is, the locking pin 21 is located on a movement path of the first chassis frame 11, and is opposite to the limiting slot 2221 and the guide part 2222, respectively.

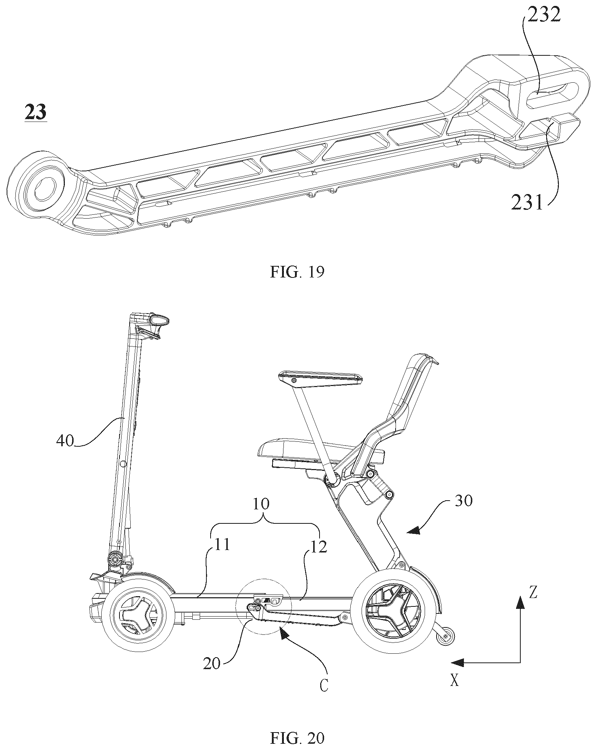

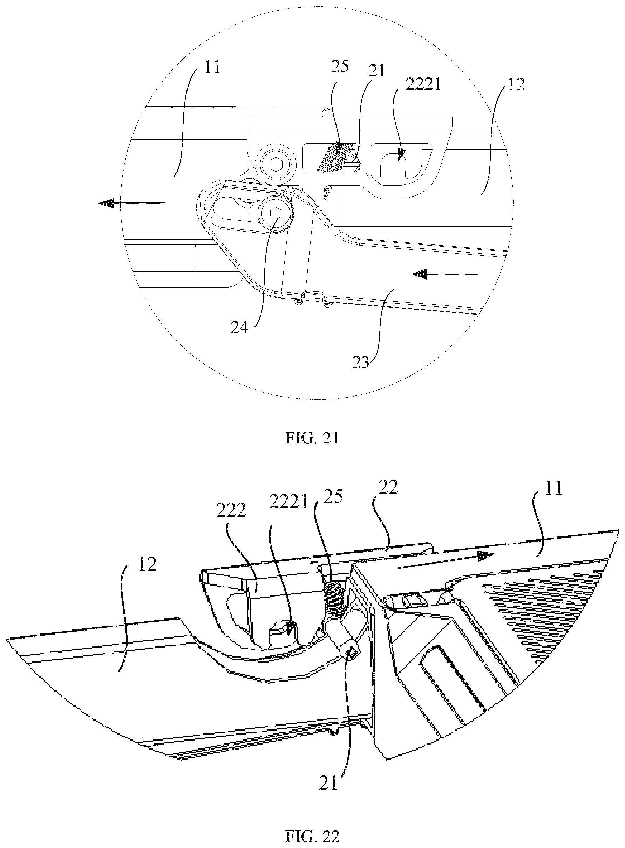

As shown in FIGS. 19 to 22, during the extending process of the chassis 10, the first chassis frame 11 is moved towards the front of the mobility scooter 100 with respect to the second chassis frame 12 along the first horizontal direction. During the movement of the first chassis frame 11, the guide part 2222 is contacted with the locking pin 21 earlier than the limiting slot. An abutting force created by the guiding portion 2222 abutting against the locking pin 21 can cause the locking hook 22 to rotate relative to the first chassis frame 11, so that the limiting slot 2221 is opposite to the locking pin 21.

It should be noted that when the first chassis frame 11 is moved into position, the limiting slot 2221 is opposite to the locking pin 21, and the locking hook 22 can be further locked into the limiting slot 2221 to achieve the locking of the first chassis frame 11 and the second chassis frame 12. That is, the limiting slot 2221 is configured such that the locking pin 21 is fastened into the limit slot 2221 when the chassis 10 is fully extended.

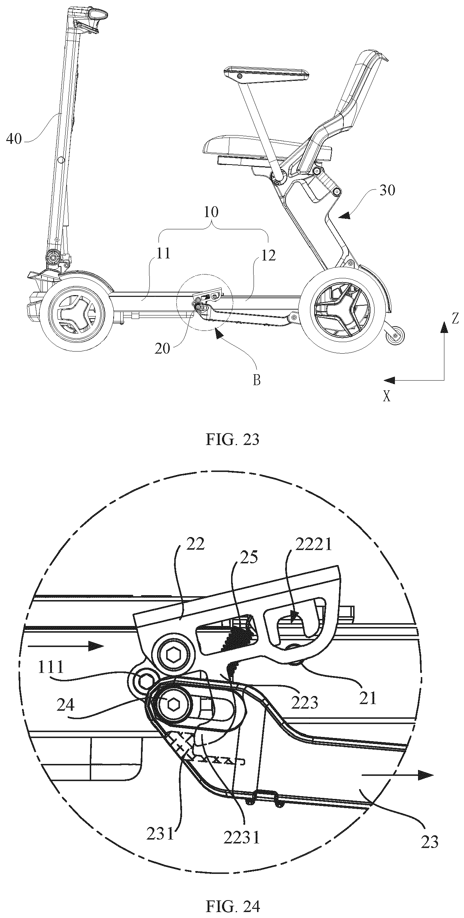

As shown in FIGS. 23 to 25, in an embodiment of the present application, the unlocking part 2231 is configured such that when the chassis 10 is retracted, the unlocking part 2231 receives an unlocking force and drives the locking hook 22 to rotate, and the locking pin 21 is released from the limiting slot 2221. Exemplary, the unlocking part 2231 and the guide part 2222 are respectively located at both ends of the locking hook 22, where the unlocking part 2231 is configured close to a rotation center with respect to the guide part 2222, and the unlocking part 2231 is used to release the locking state between the locking pin 21 and the limiting slot 2221. In an embodiment of the present application, the unlocking part 2231 is used to receive the unlocking force and make the locking hook 22 rotate, and thus the locking pin 21 is released from the limiting slot 2221, and the first chassis frame 11 can be moved relative to the second chassis frame 12 to achieve the retraction of the chassis 10.

In order to facilitate unlocking and locking of the chassis 10, the locking mechanism 20 provided by an embodiment of the present application further includes a force application arm 23. The force application arm 23 includes a first end and a second end, which are provided opposite to each other. The first end of the force application arm 23 is slidably connected to the first chassis frame 11, and can drive the first chassis frame 11 to move. The second end of the force application arm 23 is configured as a force application part, and an apply force can be provided to the force application arm 23 through the force application part.

Further, the first end of the force application arm 23 is provided with an abutting part 231. The abutting part 231 and the unlocking part 2231 are arranged opposite to each other along the first horizontal direction, the abutting part 231 is disposed at the front side of the unlocking part 2231 along the first horizontal direction, and the unlocking part 2231 is located on a movement path of the abutting part 231.

When there is a need to retract the chassis 10, an external force can be applied to the force application part, and thus the force application arm 23 can be moved. The force application arm 23 is slid relative to the locking hook 22, and the abutting part 231 follows the force application arm 23 to move backward. When the abutting part 231 and the unlocking part 2231 abut with each other, an abutting force generated between the abutting part 231 and the unlocking part 2231 is configured as an unlocking force that causes the locking hook 22 to be rotated relative to the first chassis frame 11 and to cause the locking pin 21 to be released from the limiting slot 2221.

In an embodiment, a guide pin 24 is provided between the first chassis frame 11 and the locking hook 22. The guide pin 24 is vertically mounted to a side surface of the first chassis frame 11 along the second horizontal direction. A second end of the guide pin 24 passes through the locking hook 22, and is slidably mounted to the force application arm 23. The first end of the force application arm 23 is provided with a guide groove 232 extending along the first horizontal direction. A second end of the guide pin 24 is inserted into the guide groove 232 and is slidable along the guide groove 232.

Further, the second end of the guide pin 24 is provided with a limiting cap. The guide groove 232 is configured as a sinking groove provided on the force application arm 23. When the guide pin 24 is installed to the first chassis frame 11, the limiting cap abuts against a side surface of the sinking groove to prevent the guide pin 24 from being separated from the force application arm 23.

In some embodiments, the locking hook 22 provided by the embodiments of the present application includes a hook body 221 arranged between the first chassis frame 11 and the force application arm 23. Along the first horizontal direction, one end of the hook body 221 is provided with a hinged hole 2211; the first chassis frame 11 is provided with a hinged shaft; the hook body 221 is installed to the hinged shaft through the hinged hole 2211, and the hook body 221 is rotatable relative to the first chassis frame 11 to form a rotation center of the locking hook 22.

To facilitate locking of the locking hook 22 with the locking pin 21, a portion of the hook body 221 in an embodiment of the present application is configured to protrude towards the second chassis frame 12, and the limiting slot 2221 is provided in the protruding part so as to allow the locking pin 21 to be fastened into the limiting slot 2221. Such an arrangement not only ensures that the end of the locking pin 21 protrudes from the second chassis frame 12 and is located within the gap between the first chassis frame 11 and the second chassis frame 12, but also enables the locking pin 21 to be fastened to the limiting slot 2221.

Exemplary, the locking hook 22 further includes a fixture block 222. The fixture block 222 is disposed on a surface, facing the second chassis frame 12, of the hook body 221. The fixture block 222 is configured to protrude from a surface of the hook body 221 along the second horizontal direction. That is, the fixture block 222 is arranged close to the locking pin 21. The limiting slot 2221 is provided at the bottom of the fixture block 222. A middle region of the bottom of the fixture block 222 is concave towards the inside and forms the limiting slot 2221 that is matched with the locking pin 21.

Further, the fixture block 222 is located at one end, which is away from the rotation center, of the hook body 221 along the first horizontal direction, and is located outside the first chassis frame 11. With such arrangement, a large first torque is formed between the fixture block 222 and the rotation center. When locking the first chassis frame 11 and the second chassis frame 12, the abutting part 231 can drive the locking hook 22 to rotate by a small abutment force so as to facilitate locking of the chassis 10.

Based on the above embodiments, a guiding slope is provided on a side, which is oriented towards the rotation center, of the fixture block 222 in an embodiment of the present application. The guiding slope extends obliquely downward towards the front side along the first horizontal direction, and the guiding slope is configured as a guide part 2222. When the first chassis frame 11 is moved towards the front side relative to the second chassis frame 12, a portion of the locking pin 21 is located on the movement path of the guiding slope and abuts against the guiding slope.

When the guiding slop abuts against the locking pin 21, the resulting abutting force between the two causes the locking hook 22 to rotate anticlockwise, so that the fixture block 222 can be lifted. The first chassis frame 11 continues to slide, the limiting slot 2221 can be located below the locking pin 21, and at this time, a pressing force can be applied to the locking hook 22 to cause the limiting slot 2221 and the locking pin 21 to be fastened.

Further, the locking hook 22 also includes an unlocking lever 223, and the unlocking lever 223 is provided at the bottom of the hook body 221. In the first horizontal direction, the unlocking lever 223 is disposed close to the rotation center, and an end of the unlocking lever 223 forms an unlocking part 2231. For example, the unlocking lever 223 may be designed as an L-shaped structure or a T-shaped structure, which includes a vertical section and a horizontal extended section; one end of the vertical section is connected with the hook body 221, the other end of the vertical section extends in the vertical direction and connects with the horizontal extended section; the end of the horizontal extended section forms the unlocking part 2231.

In an embodiment of the present application, the unlocking part 2231 is provided opposite to the abutting part 231 of the force application arm 23, and the unlocking part 2231 is provided opposite to the abutting part 231 along the first horizontal direction, and the unlocking part 2231 is located on the movement path of the abutting part 231. When the force application arm 23 is moved towards the rear side along the first horizontal direction, the abutting part 231 abuts against the unlocking part 2231, and applies an abutting force to the unlocking part 2231. The abutting force is converted into a rotational force of the locking hook 22 to make the locking hook 22 rotated, and thus the limiting slot 2221 and the locking pin 21 are separated.

It should be noted that the unlocking lever 223 provided in an embodiment of the present application is provided close to the rotation center. A second torque formed by the unlocking part 2231 and the rotation center is smaller than the first torque, so that an unlocking force applied to the unlocking part 2231 needs to be much larger than an abutting force of the guide part 2222. With this arrangement, the chassis 10 in the locked state can be avoided to be opened by accident, and thus the operational reliability of the mobility scooter 100 can be improved.

In a possible implementation, in an embodiment of the present application, the unlocking lever 223 and the hook body 221 are located in a same rotation plane along the second horizontal direction; that is, along a direction perpendicular to the hook body 221, the unlocking lever 223 and the hook body 221 are located in a same rotation plane. With this arrangement, compared with the unlocking lever 223 being located at a side, facing away from the first chassis frame 11, of the hook body 221, the size of the locking structure along the second horizontal direction can be reduced, which is beneficial to the compact structure of the mobility scooter 100.

In order to simplify the locking operation and unlocking operation of the locking mechanism 20 in an embodiment of the present application, the first chassis frame 11 is provided with an angle limiting part 111. The angle limiting part 111 is provided close to the rotation center; and the angle limiting part 111 is located on the rotation path of the locking hook 22, and can abut against the hook body 221 of the locking hook 22. With this arrangement, the rotation angle of the locking hook 22 can be limited to avoid a larger rotation angle of the locking hook 22 leading to a longer operation time and affecting the user experience.

In a possible implementation, the locking mechanism 20 provided in an embodiment of the present application further includes an elastic member 25. The elastic member 25 is disposed between the locking hook 22 and the first chassis frame 11, and the elastic member 25 is used to provide a locking force to the locking hook 22. When locking the chassis 10, the force application arm 23 is pushed forward in the first horizontal direction, the first chassis frame 11 is moved relative to the second chassis frame 12, and the abutting force between the guiding slope and the locking pin 21 needs to overcome an elastic force of the elastic member 25 and to make the locking hook 22 rotated. When the locking pin 21 is opposed to the limiting slot 2221 of the locking hook 22, the limiting slot 2221 is fastened to the locking pin 21 under the action of the elastic member 25.

Accordingly, when unlocking the chassis 10, the force application arm 23 is pulled backwards in the first horizontal direction to cause the first chassis frame 11 to be moved relative to the second chassis frame 12. The abutting force applied by the abutting part 231 on the unlocking part 2231 needs to overcome a spring force of the spring and causes the locking hooks 22 to be rotated, so as to separate the locking pin 21 from the limiting slot 2221. With this arrangement, based on the elastic force of the elastic member 25, not only the unlocking operation and the locking operation can be simplified, but also the stability of locking of the chassis 10 can be improved.

Referring to FIG. 12, the support assembly 30 in an embodiment of the present application includes at least a first linkage mechanism composed of a plurality of components; and/or a second linkage mechanism composed of a plurality of components, where the first linkage mechanism and the second linkage mechanism have some same components. The support assembly 30 is described below.

The support assembly 30 includes a first linkage mechanism, and along the second horizontal direction, the first linkage mechanism is selectively arranged at a side of the chassis 10 and rotationally connected relative to the chassis 10. A plane where the first linkage mechanism is rotated is in a first plane, the first plane is a plane on which the vertical direction and the first horizontal direction are located, and the first plane is located at an outer side of the chassis 10 along the second horizontal direction.

Specifically, the first linkage mechanism includes a seat bracket 32, a seat support frame 31, and a pedestal 36; where the seat bracket 32 is used for the installation of a seat cushion. When the mobility scooter 100 is in the unfolded state, the seat bracket 32 is located at the rear end of the chassis 10 along the first horizontal direction and the seat bracket 32 is located above the chassis 10 along the vertical direction. A certain space is maintained between the seat bracket 32 and the chassis 10 along the vertical direction, and a certain distance is maintained between the seat bracket 32 and the steering rod along the first horizontal direction so as to facilitate the user to ride and operate the steering rod.

The seat bracket 32 is provided between the chassis 10 and the seat support frame 31. The seat bracket 32 includes a first seat linkage rod 321 and a second seat linkage rod 322, and the first seat linkage rod 321 and the second seat linkage rod 322 are arranged spaced apart along the first horizontal direction. The first ends of the first seat linkage rod 321 and of the second seat linkage rod 322 are rotatably connected with the seat support frame 31 and connected to different positions of the seat support frame 31, respectively.

In the second horizontal direction, the pedestal 36 is provided at one side of the chassis 10, that is, the pedestal 36 may be provided at an outer side of the chassis 10. The second ends of the first seat linkage rod 321 and of the second seat linkage rod 322 are rotatably connected with the pedestal 36 and connected to different positions of the pedestal 36, respectively. Therefore, the first seat linkage rod 321, the second seat linkage rod 322, the pedestal 36, and the seat support frame 31 form the above mentioned first linkage mechanism, and the first linkage mechanism can be folded and unfolded. Further, when the first linkage mechanism is completely folded, the seat bracket 32 is located at the side of the chassis 10 along the second horizontal direction.

For a folded mobility scooter in the related art, its lifting and folding mechanism is located between a chassis and a seat cushion, resulting in the folded mobility scooter being thicker and less portable. However, after the mobility scooter 100 in the embodiments of the present application is completely folded, the seat bracket 32 is located at one side of the chassis 10 along the second horizontal direction, and does not occupy the space above the chassis 10. This can reduce the thickness of the folded mobility scooter 100, thereby reducing the size of the folded mobility scooter 100 and making it easier to carry.

The mobility scooter 100 provided in an embodiment of the present application further includes a backrest bracket 33 and a transmission linkage rod 34. The backrest bracket 33 is used for the mounting of a backrest cushion and is provided at the rear side of the seat support frame 31 along the first horizontal direction. The backrest bracket 33 is rotatably connected with the seat support frame 31 to form a first rotation point.

The transmission linkage rod 34 is used to connect the seat bracket 32 and the backrest bracket 33. Exemplary, the transmission linkage rod 34 is provided between the seat bracket 32 and the backrest bracket 33, and both ends of the transmission linkage rod 34 are rotatably connected with the backrest bracket 33 and the seat bracket 32, respectively, to form a second rotation point and a third rotation point, respectively.

Exemplary, the seat bracket 32 includes a first seat linkage rod 321 and a second seat linkage rod 322. One end of the transmission linkage rod 34 is rotatably connected with the backrest bracket 33 to form the second rotation point. The other end of the transmission linkage rod 34 is selectively rotationally connected with the first seat linkage rod 321 or the second seat linkage rod 322 to form the third rotation point. Therefore, the backrest bracket 33, the transmission linkage rod 34, the seat bracket 32, and the seat support frame 31 form a second linkage mechanism; that is, the support assembly 30 in an embodiment also includes a second linkage mechanism.

In an embodiment of the present application, a connection line between the first rotation point and the second rotation point is defined as a first connection line; a connection line between the second rotation point and the third rotation point is defined as a second connection line; and when the mobility scooter 100 is fully unfolded, an angle formed between the first connection line and the second connection line ranges between 0° and 10°.

In a possible implementation, the angle formed between the first connection line and the second connection line in an embodiment of the present application is configured to be 0°; that is, the first rotation point, the second rotation point, and the third rotation point are collinear when the second linkage mechanism is fully unfolded; in other words, the first rotation point, the second rotation point, and the third rotation point are on the same straight line.

With this arrangement, when the mobility scooter 100 is in the unfolded state and is further locked by means of the locking assembly, the second linkage mechanism is in the self-locking state. The transmission linkage rod 34 not only has the function of transmission and connection, but also acts as a force-bearing rod to support the seat support frame 31. When a driver drives the mobility scooter 100, the transmission linkage rod 34 can share part of the gravity; that is, part of the gravity acts on the locking pin 21 of the locking assembly, and part of the gravity acts on the transmission linkage rod 34 to reduce the load-bearing strength of the locking pin 21.

The mobility scooter 100 according to an embodiment of the present application further includes a first rod member 35. A first end of the first rod member 35 is connected with the first chassis frame 11, and a second end of the first rod member 35 is connected with the first seat linkage rod 321 or the second seat linkage rod 322.

It can be understood that if the chassis 10 is selected to jointly act with the first linkage mechanism, the second end of the first rod member 35 jointly acts with the first seat linkage rod 321. When the chassis 10 is selected to jointly act with the second linkage mechanism, the second end of the first rod member 35 jointly acts with the second seat linkage rod 322. The second seat linkage rod 322 is provided at the rear side of the first seat linkage rod 321 along the first horizontal direction, and the other end of the second seat linkage rod 322 is rotatably connected with the transmission linkage rod 34.

Hereinafter, an embodiment of the present application will be described with the chassis 10 and the second linkage mechanism jointly acting as an example. One end, which is away from the seat support frame 31, of the second seat linkage rod 322 has a bent portion, and the bent portion is provided at the rear side of the pedestal 36 along the first horizontal direction, and bypasses the pedestal 36 and is rotatably connected with the first rod member 35.

The second seat linkage rod 322 includes a first end and a second end, where the first end of the second seat linkage rod 322 is rotatably connected with the seat support frame 31, and a portion, which is close to the first end, of the second seat linkage rod 322 is rotatably connected with the transmission linkage rod 34.

For example, the portion, which is close to the first end, of the second seat linkage rod 322 is provided with a support arm extending towards the transmission linkage rod 34. One end of the transmission linkage rod 34 is rotatably connected with the backrest bracket 33 to form the second rotation point, and the other end of the transmission linkage rod 34 is connected with the support arm to form the third rotation point.

The second end of the second seat linkage rod 322 is normally rotatably connected with the pedestal 36. In order to make the first chassis frame 11 and the second linkage mechanism jointly act, the second end of the second seat linkage rod 322 has an extension section. The extension section is integrally formed with the second seat linkage rod 322, and the extension section is configured as a bent portion, and the bent portion is provided at the rear side of the pedestal 36.

The bent portion 53 bypasses the pedestal 36 and is rotatably connected with the first rod member 35. With this arrangement, the bent portion not only allows a clearance space to be formed between the bent portion and the chassis 10, but also effectively increases the swing range of the first rod member 35, thereby increasing the sliding displacement of the first chassis frame 11 along the first horizontal direction. When the second linkage mechanism is folded or unfolded, the first chassis frame 11 and the second chassis frame 12 can be automatically retracted or extended.

It is to be noted that the first rod member is connected with the force application arm, or the first rod member is configured as the force application arm. If the force application arm is selected to be connected with the first rod member, the force application arm is provided between the linkage rod folding mechanism and the first chassis frame, and the linkage rod folding mechanism drives, by means of the first rod member, the force application arm to move. In a possible implementation, the first rod member is configured as the force application arm, and an end of the first rod member is slidably connected with the first chassis frame.

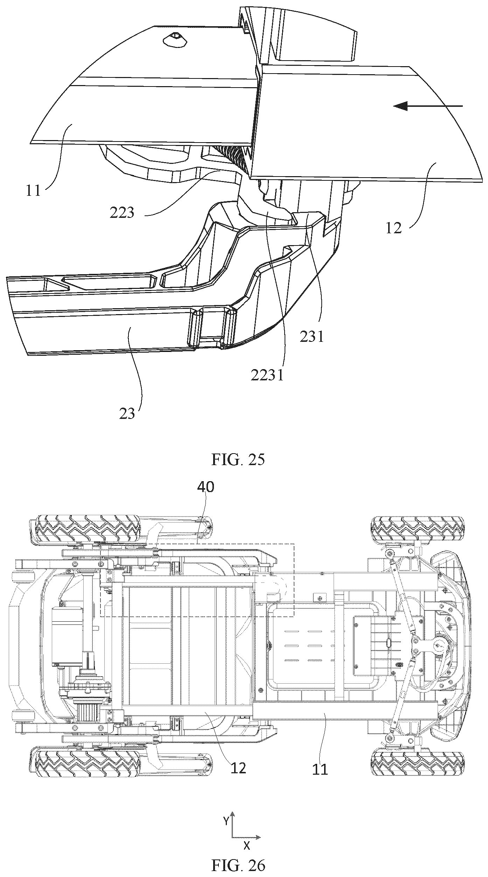

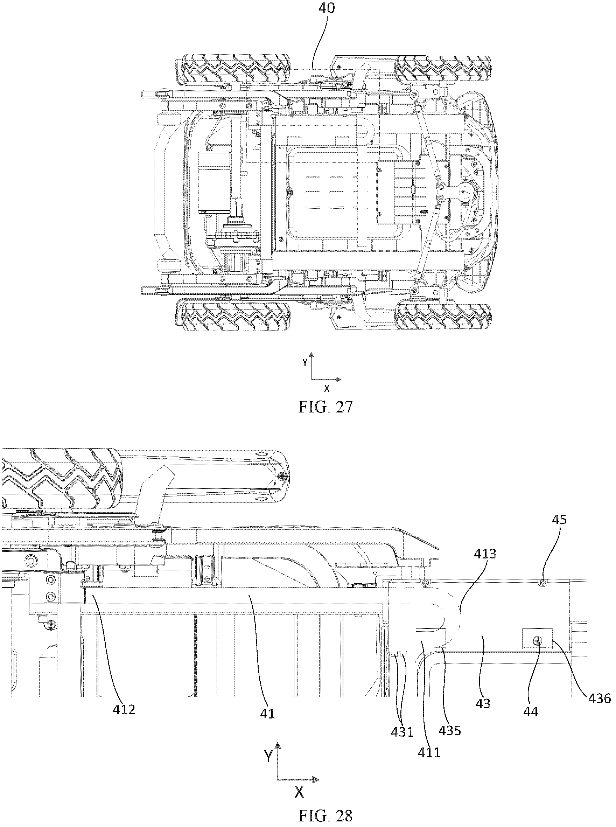

As shown in FIGS. 26 and 27, the chassis 10 according to an embodiment of the present application further includes a wire harness storage mechanism 40. The wire harness storage mechanism 40 is provided on the chassis 10, and the wire harness storage mechanism 40 is connected with both the first chassis frame 11 and the second chassis frame 12. Cable wire harnesses are electrical connection lines of the mobility scooter, and a plurality of cable wire harnesses are distributed at the bottom of the chassis 10. The wire harness storage mechanism 40 is used for the plurality of cable harnesses to be uniformly and regularly stored so as to avoid harness messy knotting.

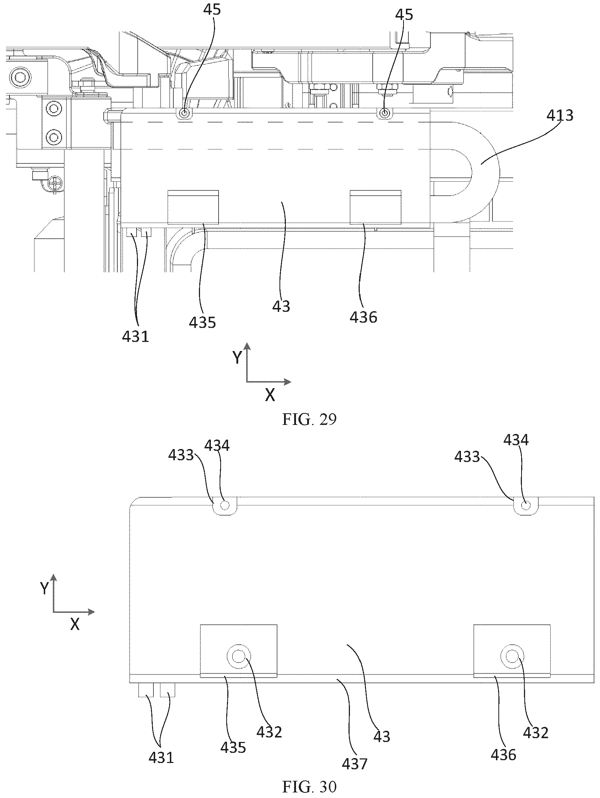

As shown in FIGS. 28 and 29, the wire harness storage mechanism 40 includes a wire harness box 41 and wire harnesses. The wire harness box 41 has first end 411 and second end 412, which are opposite to each other along its longitudinal direction. The first end 411 is fixedly connected to the first chassis frame 11, and the second end 412 is fixedly connected to the second chassis frame 12. The wire harness box 41 is matched with the wire harnesses, so that the wire harnesses are placed in the wire harness box 41. In the process of extending and retracting the chassis, the wire harness box 41 can store the wire harnesses, protect the wire harnesses, restrict the motion trail of the wire harnesses, so as to avoid harness messy knotting, and ensure the normal use of the mobility scooter, and also avoid damage to the wire harnesses and protect the life of the wire harnesses. In addition, the wiring harnesses are uniformly and regularly stored, so as to improve the aesthetics of the mobility scooter.

Where, each wire harness has first connection end and second connection end, which are opposite to each other along its length. The first connection end is fixedly connected in the first end 411, and the second connection end is fixedly connected in the second end 412. During the folding process of the entire scooter, the second end 412 of the wire harness box 41 is subjected to a push force and is moved in the first horizontal direction, and the wire harness is moved under the restriction of the wire harness box 41. Because the wire harness box 41 has a corresponding radius during the moving and deforming thereof, push and pull forces to which the wire harness is subjected are minimized at the maximum level, and the wire harness can be well protected.

Referring to FIG. 28, the chassis 10 is in the extended state. The first chassis frame 11 is slid to a first position, the first chassis frame 11 and the second chassis frame 12 are horizontally arranged, the first chassis frame 11 and the second chassis frame 12 are in the same plane, and the first chassis frame 11 and the second chassis frame 12 are adjacent; at this time, the first end 411 is away from the second end 412 along the first horizontal direction.

Referring to FIG. 29, the chassis 10 is in the retracted state, the first chassis frame 11 is slid to a second position, the first chassis frame 11 and the second chassis frame 12 are at least partially overlapped, and the first chassis frame 11 is slid onto the second chassis frame 12; at this time, the first end 411 is close to the second end 412 along the first horizontal direction.

In an embodiment of the present application, the wire harness box 41 can be bent and deformed. The wire harness box 41 includes a bent section 413, and the bent section 413 has a preset bending radius, which can be set by a person skilled in the art according to actual situations.

When the first end 411 is moved away from the second end 412 along the first horizontal direction, the bent section 413 will close to the first end 411. When the first end 411 is moved close to the second end 412 along the first horizontal direction, the bent section 413 will be away from the first end 411; at this time, the length of the straight section of the wire harness box 41 decreases.

Referring to FIG. 30, in an embodiment of the present application, the wire harness box 41 is a drag chain formed by the chaining of a plurality of units. The drag chain has an accommodating cavity, and wire harnesses are disposed in the accommodating cavity. Wire harnesses are placed in the drag chain to protect the harnesses from abrasion. The wire harnesses are prevented from tangling, abrasion, being pulled out, and being scattered.

Continue to refer to FIGS. 28 to 30, in an embodiment of the present application, the wire harness storage mechanism 40 further includes a storage box 43. The storage box 43 is fixedly connected to the first chassis frame 11. The storage box 43 has a first through hole. Both the first end 411 and the bent section 413 are disposed, through the first through hole, into the storage box 43.

The storage box 43 includes a first area and a second area; the first area and the second area adjacent in the first horizontal direction; the first area is close to the second chassis frame 12, and the second area is away from the second chassis frame 12.

When the first end 411 is moved away from the second end 412 along the first horizontal direction, the bent section 413 is located in the first area within the storage box 43; when the first end 411 is moved close to the second end 412 along the first horizontal direction, the bent section 413 is located in the second area within the storage box 43.

The storage box 43 is used to uniformly and regularly store the wire harnesses and the wire harness box 41, so as to improve the aesthetic of the mobility scooter. In addition, when the chassis 10 is in the retracted state, the wire harnesses and the wire harness box 41 do not go down due to their own gravity. The situation, in which the wiring harnesses and the wiring harness box 41 are contacted with other components, can be prevented during the retracting or extending of the chassis 10, thereby improving the safety of the mobility scooter.

Where, the storage box 43 is provided with a fixing position 431. The first end 411 is fixedly connected to the fixing position 431, and the fixing position 431 is located in the first area. The fixing position 431 may be a threaded hole, and the first end 411 is fixedly connected to the fixing position 431 by a threaded connecting member.

In an embodiment of the present application, the storage box 43 further includes a second through hole. The first through hole and the second through hole have the same central axis, and the central axes of the first through hole and of the second through hole are axes in the first horizontal direction; and the first through hole and the second through hole are communicated with each other in the first horizontal direction.

Continue to refer to FIG. 29, when the first end 411 is moved close to the second end 412 along the first horizontal direction, part of the bent section 413 protrudes out of the storage box 43 from the second through hole. When the chassis 10 is in the retracted state, the bent section 413 is prevented from abutting against an inner wall of the storage box 43, thereby protecting the wire harnesses and the wire harness box 41 from bending and deforming.

In an embodiment of the present application, the chassis 10 further includes a first connecting member 44 and a second connecting member 45. The storage box 43 includes a top plate and a bottom plate that are disposed oppositely along the vertical direction. The bottom plate is provided with a first fixing hole 432, the first chassis frame 11 is provided with a second fixing hole, and the first fixing hole 432 is matched with the second fixing hole. The first connecting member 44 is connected with both the first fixing hole 432 and the second fixing hole. Therefore, the storage box 43 is fixedly connected to the first chassis frame 11.

The storage box 43 includes a first side wall, the first side wall intersects both the top plate and the bottom plate, and both ends of the first side wall along the vertical direction are connected with the top plate and the bottom plate, respectively. The first side wall is provided with an avoidance groove 433. A third fixing hole 434 is provided at the connection position between the bottom plate and the first side wall. The first chassis frame 11 is provided with a fourth fixing hole, the third fixing hole 434 is matched with the fourth fixing hole. The second connecting member 45 is connected with both the third fixing hole 434 and the fourth fixing hole through the avoidance groove 433. Therefore, the storage box 43 is fixedly connected to the first chassis frame 11.

In an embodiment of the present application, a first opening 435 and a second opening 436 spaced apart along the first horizontal direction are provided in the top plate. A projection of the first opening 435 in the vertical direction is located within a projection of the first area in the vertical direction. A projection of the second opening 436 in the vertical direction is located within a projection of the second area in the vertical direction. Part of the wire harness box 41 is exposed to the outside of the storage box 43 from the first opening 435 and the second opening 436. The first opening 435 and the second opening 436 are used for clearly showing the moving position of the harness box 41 in the storage box 43. When the wire harness box 41 is stuck during movement, the wire harness box 41 can be adjusted in time through the first opening 435 and the second opening 436, this is convenient for technicians to maintain.

In an embodiment of the present application, an outer surface of the top plate is provided with a wiring groove 437, and the wiring groove 437 is configured to accommodate electrical connection wires so as to ensure the safety of wiring.

Where, electrical connection wires can be embedded in the wire protection groove 437.

It is to be noted that any one of the technical solutions disclosed in the present disclosure can, to a certain extent, solve one or more of the above technical problems and realize a certain inventive object. A plurality of technical disclosures can also be combined into a whole solution to solve one or more of the above technical problems and realize a certain inventive object. It is also possible to select part of technical disclosures to be combined into a whole solution, and adopt related technologies and defective solutions, but the defective trend can be offset by this technical disclosure means, and thus overall one or more of the above technical problems can be solved to a certain extent and certain invention object can be realized. Respective technical disclosures are combined into complete technical solutions, and constitute indivisible whole solutions, and thus overall the technical problems can be solved and a certain inventive object can be realized.

Any one of the technical disclosures in the present disclosure, as well as the recombination of a plurality of technical disclosures can form complete technical solutions, and can solve one or more of the above multiple technical problems to achieve the purpose of the invention, which all fall within the contents of the present disclosure and are directly and unambiguously determined in accordance with the contents of the present disclosure.

It is understood by those skilled in the art that the disclosure of the present invention is not limited to the specific embodiments described above, and that certain elements of the embodiments may be modified and substituted without departing from the spirit of the present application. The scope of this application is defined by the appended claims.

## Claims

1. A vehicle, comprising a chassis, a seat, and a support assembly;
one end of the support assembly is rotatably connected with the chassis, the other end of the support assembly is rotatably connected with the seat, and the support assembly is able to drive the seat to be folded or unfolded;
when the seat is in an unfolded state, the seat is disposed spaced apart from the chassis in a vertical direction;
when the seat is in a folded state, the seat is attached onto the chassis;
the chassis comprises a first chassis frame and a second chassis frame, and the first chassis frame and the second chassis frame are provided adjacent to each other along a first horizontal direction, and the first chassis frame is able to slide relative to the second chassis frame to make the chassis retracted or extended;
when the chassis is in an extended state, the first chassis frame is slid to a first position and the first chassis frame and the second chassis frame are adjacent to each other;
when the chassis is in a retracted state, the first chassis frame is slid to a second position and the first chassis frame and the second chassis frame are at least partly overlapped;
the seat is folded while the chassis is retracted, and the seat is unfolded while the chassis is extended;
wherein a projection of the support assembly in the vertical direction is not overlapped with a projection of the chassis in the vertical direction.

2. The vehicle according to claim 1, wherein the support assembly comprises a first linkage mechanism; the first linkage mechanism comprises a seat bracket, a seat support frame, and a pedestal;
the pedestal is fixedly connected to the second chassis frame, and the seat support frame is fixedly connected to the seat;
the pedestal is provided at a side of the second chassis frame along a second horizontal direction;
the seat bracket comprises a seat linkage rod, one end of the seat linkage rod is rotatably connected with the pedestal, and the other end of the seat linkage rod is rotatably connected with the seat supporting frame;
wherein the second horizontal direction is perpendicular to the first horizontal direction.

3. The vehicle according to claim 2, wherein when the first linkage mechanism is completely folded, an end of the seat bracket away from the pedestal is inclined along the first horizontal direction and is located below the chassis in the vertical direction.

4. The vehicle according to claim 2, wherein the vehicle further comprises a backrest bracket and a transmission linkage rod;
the backrest bracket is rotatably connected with the seat support frame to form a first rotation point;
the transmission linkage rod is configured between the backrest bracket and the seat bracket, and one end of the transmission linkage rod is rotatably connected with the backrest bracket to form a second rotation point; the other end of the transmission linkage rod is rotatably connected with the seat bracket to form a third rotation point;
the backrest bracket, the transmission linkage rod, the seat bracket, and the seat support frame form a second linkage mechanism.

5. The vehicle according to claim 4, wherein the seat bracket is configured for mounting a seat cushion;
when the second linkage mechanism is fully unfolded, the first rotation point is located above the seat cushion in the vertical direction;
when the second linkage mechanism or the first linkage mechanism is completely folded, the seat cushion is located above the chassis and close to an upper surface of the chassis; and/or the seat cushion is attached to the upper surface of the chassis.

6. The vehicle according to claim 4, wherein the backrest bracket is provided with a backrest cushion;
when the second linkage mechanism is fully folded, the backrest cushion is located above the chassis and a back side of the backrest cushion is close to the upper surface of the chassis; and/or the back side of the backrest cushion is attached to the upper surface of the chassis;
along the first horizontal direction, the backrest cushion and the seat cushion are disposed opposite to each other and located in a same plane.

7. The vehicle according to claim 4, wherein a first connection line is formed between the first rotation point and the second rotation point, and a second connection line is formed between the second rotation point and the third rotation point;
the first rotation point, the second rotation point, and the third rotation point are configured such that an included angle between the first connection line and the second connection line ranges from 0° to 10° when the second linkage mechanism is fully unfolded.

8. The vehicle according to claim 4, wherein the vehicle further comprises a first rod member;
a first end of the first rod member is connected with the first chassis frame;
the seat linkage rod comprises a first seat linkage rod and a second seat linkage rod, and the first seat linkage rod is provided at a front side of the second seat linkage rod along the first horizontal direction, and the first seat linkage rod and the second seat linkage rod are provided in parallel;
one end of the first seat linkage rod and one end of the second seat linkage rod are rotatably connected with the pedestal, and the other end of the first seat linkage rod and the other end of the second seat linkage rod are rotatably connected with the seat support frame;
a second end of the first rod member is rotatably connected with the first seat linkage rod or the second seat linkage rod, so as to make the first chassis frame and the seat bracket jointly act, and the seat bracket is configured to drive the first chassis frame to slide relative to the second chassis frame along the first horizontal direction when the first linkage mechanism or the second linkage mechanism acts.

9. The vehicle according to claim 8, wherein one end of the second seat linkage rod away from the seat support frame has a bent portion; the bent portion is provided at a rear side of the pedestal along the first horizontal direction, and bypasses the pedestal and is rotatably connected with the first rod member.

10. The vehicle according to claim 4, wherein the vehicle further comprises a controller, a position sensor, a first actuator, and a second actuator;
a control signal from the controller is in communication with the first actuator and the position sensor;
the position sensor is provided on the seat support frame or the pedestal to detect an act of the first linkage mechanism or the second linkage mechanism;
the first actuator is provided between the first chassis frame and the second chassis frame, and the controller is configured to control the first actuator to act when the first linkage mechanism or the second linkage mechanism acts, so as to make the first chassis frame slid relative to the second chassis frame along the first horizontal direction;
the second actuator acts on the first linkage mechanism or the second linkage mechanism to make the vehicle folded or unfolded;
the second actuator is in signal connection with the controller, and when the second actuator acts, the controller controls the first actuator to act.

11. The vehicle according to claim 4, wherein the backrest bracket rotates clockwise relative to the seat support frame to fold the second linkage mechanism;
a side of the seat support frame facing the backrest bracket is provided with a first limit surface, and the backrest bracket is provided with a first limit block matched with the first limit surface;
when the second linkage mechanism is fully unfolded, the first limit block abuts against the first limit surface.

12. The vehicle according to claim 11, wherein a side of the seat support frame close to the seat bracket is provided with a second limit surface;
the second limit surface is provided to match with the first seat linkage rod or the second seat linkage rod;
when the second linkage mechanism is fully folded, the second limit surface abuts against the first seat linkage rod or the second seat linkage rod.

13. The vehicle according to claim 1, wherein the vehicle further comprises a locking mechanism disposed between the first chassis frame and the second chassis frame; the locking mechanism is configured to lock the first chassis frame and the second chassis frame when the chassis is fully extended, and to unlock the locked state of the first chassis frame and the second chassis frame when the chassis is retracted;
the locking mechanism comprises a locking pin and a locking hook;
the locking pin is provided on the second chassis frame; the locking pin is configured to be received in a gap between the first chassis frame and the second chassis frame;
the locking hook is rotatably connected to the first chassis frame; the locking hook comprises a limiting slot, a guide part and an unlocking part, and the limiting slot and the guide part are opposite to the locking pin respectively along the first horizontal direction;
the guide part is configured such that the guide part abuts against the locking pin and causes the locking hook to rotate during the extending of the chassis;
the limiting slot is configured such that the locking pin is fastened to the limiting slot when the chassis is fully extended;
the unlocking part is configured to receive an unlocking force and drive the locking hook to rotate when the chassis is retracted, and the locking pin is disengaged from the limiting slot.

14. The vehicle according to claim 13, wherein
the first end of the first rod member is slidably connected to the first chassis frame, and the second end of the first rod member is configured as a force application part;
the first end of the first rod member has an abutting part matched with the unlocking part, the abutting part is configured to abut against the unlocking part and provide an unlocking force when the force application part is subjected to a force and the first rod member is slid relative to the locking hook.

15. The vehicle according to claim 14, wherein a guide pin is provided between the first chassis frame and the locking hook;
the first end of the first rod member is provided with a guide groove, the guide pin is slidably mounted in the guide groove, and an end of the guide pin is fixed to the first chassis frame.

16. The vehicle according to claim 15, wherein the locking hook comprises a hook body; along the first horizontal direction, one end of the hook body is provided with a hinged hole;
the hook body is mounted to the first chassis frame through the hinged hole and forms a rotation center of the locking hook.

17. The vehicle according to claim 16, wherein the locking hook further comprises a fixture block;
the fixture block is provided on a surface of the hook body facing the second chassis frame;
the fixture block is located at one end of the hook body away from the rotation center and is located outside the first chassis frame along the first horizontal direction;
a bottom of the fixture block is concave and forms the limiting slot;
a side of the fixture block facing the rotation center is provided with a guide inclined surface, and the guide inclined surface is configured as the guide part.

18. The vehicle according to claim 17, wherein the locking hook further comprises an unlocking lever provided at a bottom of the hook body;
along the first horizontal direction, the unlocking lever is provided close to the rotation center, and an end of the unlocking lever forms the unlocking part; the unlocking lever and the hook body are located in a same rotational plane along a direction perpendicular to the hook body.

19. The vehicle according to claim 17, wherein the first chassis frame is provided with an angle limiting part;
the angle limiting part is provided close to the rotation center, and the angle limiting part is located on a rotation path of the locking hook and abuts against the locking hook.

20. The vehicle according to claim 14, wherein the locking mechanism further comprises an elastic member;
the elastic member is provided between the locking hook and the first chassis frame, and the elastic member is configured to provide a locking force to the locking hook.

21. The vehicle according to claim 2, wherein the vehicle further comprises a wire harness storage mechanism; the wire harness storage mechanism comprises a wire harness box and a wire harness; a first end of the wire harness box is fixedly connected to the first chassis frame, and a second end of the wire harness box is fixedly connected to the second chassis frame;
the wire harness is provided in the wire harness box;
when the chassis is in the extended state, the first end portion is away from the second end along the first horizontal direction;
when the chassis is in the retracted state, the first end is close to the second end along the first horizontal direction.

22. The vehicle according to claim 21, wherein the wire harness storage mechanism further comprises a storage box, and the storage box is fixedly connected to the first chassis frame;
the wire harness box comprises a bent section;
the storage box has a first through hole, and the first end and the bent section are provided in the storage box through the first through hole;
when the first end is away from the second end along the first horizontal direction, the bent section is close to the first end, and the bent section is located in a first area in the storage box;
when the first end is close to the second end along the first horizontal direction, the bent section is away from the first end portion, and the bent section is located in a second area in the storage box;
wherein the first area is close to the second chassis frame and the first end is fixedly connected in the first area; the second area is away from the second chassis frame.

23. The vehicle according to claim 22, wherein the storage box further comprises a second through hole, and the first through hole is in communication with the second through hole along the first horizontal direction;
when the first end is close to the second end along the first horizontal direction, part of the bent section protrudes out of the storage box from the second through hole.

24. The vehicle according to claim 23, wherein a first opening and a second opening spaced apart along the first horizontal direction are provided on the top plate, a projection of the first opening in the vertical direction is located within a projection of the first area in the vertical direction, and a projection of the second opening in the vertical direction is located within a projection of the second area in the vertical direction;
part of the wire harness box is exposed from the first opening and the second opening to an outside of the storage box.

25. The vehicle according to claim 21, wherein the wire harness box is a drag chain formed by linking a plurality of units; the drag chain has an accommodating cavity, and the wire harness is provided in the accommodating cavity.

26. A method of using the vehicle according to any one of claims 1 to 25, wherein the vehicle comprises the chassis, the pedestal, the seat bracket, the seat support frame, the backrest bracket, and the transmission linkage rod;
the seat bracket comprises the seat linkage rod, one end of the seat linkage rod is rotatably connected with the seat support frame;
along the second horizontal direction, the pedestal is provided at the side of the chassis, and the pedestal is rotatably connected with one end of the seat linkage rod; and the seat bracket, the seat support frame, and the pedestal form the first linkage mechanism;
the backrest bracket is rotatably connected to the seat support frame, the transmission linkage rod is rotatably connected with the backrest bracket and the seat support frame respectively, and the backrest bracket, the transmission linkage rod, the seat bracket and the seat support frame form the second linkage mechanism;
the chassis comprises the first chassis frame and the second chassis frame; along the first horizontal direction, the first chassis frame is slidably mounted to one side of the second chassis frame, and the first chassis frame and the second chassis frame are located in the same plane; and the seat bracket and the first chassis frame jointly act;
the method comprises:
when folding, rotating the backrest bracket clockwise, rotating the transmission linkage rod and the seat bracket anticlockwise relative to the seat support frame, and driving, by one end of the seat bracket away from the seat support frame, the first chassis frame to move along the first horizontal direction so as to retract the chassis; and/or
when unfolding, rotating the backrest bracket anticlockwise, rotating the transmission linkage rod and the seat bracket clockwise relative to the seat support frame, and driving, by one end of the seat bracket away from the seat support frame, the first chassis frame to move along the first horizontal direction so as to extend the chassis.
